# FASCICULE DE BREVET EUROPEEN

(11) **EP 0 946 362 B1**
(45) Date de publication et mention de la délivrance du brevet: **13.11.2002**
(21) Numéro de dépôt: 97954373.3
(22) Date de dépôt: 09.12.1997
(51) Int. Cl.: B32B 27/08, F16L 9/12, B60K 15/00

(54) **STRUCTURE MULTICOUCHE A BASE DE PLASTIQUE ET TUBE A STRUCTURE MULTICOUCHE**
KUNSTSTOFFBASIERTE MEHRSCHICHTSTRUKTUR UND MEHRSCHICHTIGES ROHR
PLASTIC BASED MULTILAYER STRUCTURE AND TUBE WITH MULTILAYER STRUCTURE

(30) Priorité: 20.12.1996 FR 9616074
(43) Date de publication de la demande: 06.10.1999
(73) Titulaire: Rhodia Engineering Plastics Srl, 20020 Ceriano Laghetto (MI) (IT)
(72) Inventeur: PEDUTO, Nicolangelo, I-20031 Cesano Maderno (IT)
(74) Mandataire: Esson, Jean-Pierre
(86) Numéro de dépôt international: EP9706891
(87) Numéro de publication internationale: WO98028131

(56) Documents cités:
- EP-A- 0 171 626
- EP-A- 0 618 390
- EP-A- 0 673 762
- DATABASE WPI Section Ch, Week 8921 Derwent Publications Ltd., London, GB; Class A14, AN 89-155784 XP002039602 & JP 01 097 639 A (JAPAN SYNTHETIC RUBBER CO LTD) , 17 avril 1989

## Description

La présente invention concerne une structure multicouche à base de plastique. notamment convenable pour la fabrication de tubes ou conduits destinés à transporter des fluides liquides comme des alcools, des carburants liquides provenant du pétrole. des carburants pouvant contenir des composés oxygénés tels que, par exemple des alcools.

Elle concerne plus particulièrement une structure multicouche présentant des propriétés barrières améliorées, notamment vis-à-vis des fluides indiqués ci-dessus.

L'utilisation de tubes, conduits en plastique pour le transport de fluide tel que les carburants dans les moteurs à explosion est connue. Par exemple, des tubes ou conduits en polyamide 12 sont souvent utilisés dans les véhicules automobiles.

Toutefois, les normes concernant la construction des véhicules, notamment celles tendant à lutter contre la pollution atmosphérique générée par ceux-ci deviennent de plus en plus contraignantes.

En conséquence, les tubes ou conduits à structure monocouche, par exemple réalisés en polyamide 12 ne peuvent respecter les nouvelles spécifications imposées aux moteurs à combustion. Ainsi, il devient très difficile de respecter les normes et caractéristiques requises concernant la propriété barrière aux vapeurs de carburant tout en conservant des propriétés mécaniques convenables, telles que la souplesse, la résistance au craquage ou la stabilité dimensionnelle.

Pour remédier à ces inconvénients, il a été proposé des tubes ou conduits à structure multicouche comprenant une couche de polyamide, notamment polyamide 11 ou 12 et une couche d'alcool éthervinylique (voir brevet français n° 2 579 290. EP 0 428 834, EP 0 428 833). Toutefois, l'utilisation de ces tubes a démontré qu'ils ne pouvaient répondre à toutes les caractéristiques requises pour l'utilisation dans les moteurs à explosion.

Il a également été proposé une structure multicouche comprenant comme couche externe en polyamide 11 et comme couche interne un polyfluorovinylidène. Le polyfluorovinylidène est plastifié avec notamment un benzène sulfonamide. Toutefois. comme dans le cas précédent, de telles structures ne peuvent pas satisfaire les caractéristiques requises pour l'application principale de celle-ci, par exemple les conduits de carburant des moteurs à explosion. Notamment, elle présente un défaut dans l'adhérence entre les couches.

Il a également été proposé des structures multicouche comprenant des couches de polyfluorovinylidène associées à des couches de polyamide. Pour améliorer l'adhérence entre ces couches et donc les propriétés d'ensemble de la structure multicouche, il a été proposé d'utiliser une composition de polyfluorovinylidène comprenant soit un polymère glutarimide (EP 0 637 511) soit un copolymère acrylate comprenant au moins des fonctions anhydrides obtenues par cyclisation de deux fonctions carboxyliques voisines. Il a été ainsi proposé (EP 0 618 390) une couche de polymère acrylique entre une couche de polyamide et une couche de PVDF. Toutefois, l'adhérence entre les différentes couches de la structure et les propriétés mécaniques de celle-ci se dégradent au cours du vieillissement.

Un des buts de la présente invention est de proposer une structure multicouche à propriétés mécaniques et barrière améliorées et présentant un ensemble de propriétés convenables pour la fabrication ou réalisation de conduits ou tubes de transport de fluides, notamment des carburants, plus particulièrement des carburants contenant des composés oxygénés tels que de l'alcool.

A cet effet, l'invention propose une structure multicouche comprenant au moins une couche (A) formée à partir d'une composition à base de polyamide et au moins une couche (B) adjacente formée à partir d'une composition à base de polyfluorovinylidène. Selon l'invention, l'adhérence entre les deux couches est favorisée par la présence dans au moins l'une des couches (A) et (B) d'un composé polyacrylate comprenant des unités récurrentes de formules suivantes : 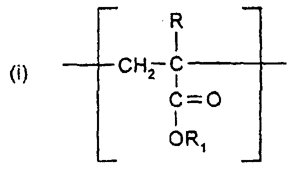 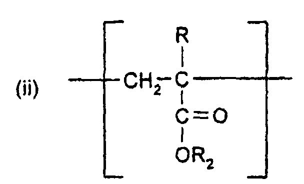 dans lesquelles :
- R, R₁ :: identiques ou différents, représentent l'hydrogène, des groupements alkyles comprenant de 1 à 12 atomes de carbone,
- R₂ :: est un radical de formule R₄-T dans laquelle R₄ est un radical alkyle, aryle, arylalkyle ou alkylaryle, et T représente un groupe fonctionnel amine, époxy, acide ou anhydride
et éventuellement des unités récurrentes de formule : 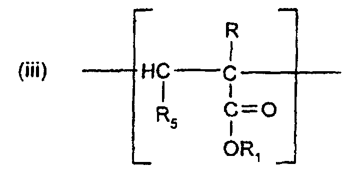 et/ou 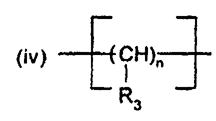 dans laquelle :
R₅ représente une chaîne polyalkyl(méth)acrylate
R₃ représente un radical alkyl comprenant de 1 à 6 atomes de carbone,
n : est un nombre entier compris entre 1 et 4.

L'invention a également pour objet une structure multicouche comprenant comme dans la description précédente, au moins une couche (A) formée à partir d'une composition à base de polyamide et au moins une couche adjacente (B) formée à partir d'une composition à base de polyfluorovinylidène. Toutefois, dans ce mode de réalisation de l'invention, la structure comprend une couche (C) intermédiaire adhésive disposée entre les couches (A) et (B) et étant formée à partir d'une composition comprenant au moins un composé polyacrylate tel que défini précédemment. Dans ce mode de réalisation, les compositions de polyamide ou polyfluorovinylidène formant respectivement les couches (A) et (B) peuvent ou non comprendre un composé polyacrylate tel que défini précédemment.

Dans la suite de la description on entendra par un ou le composé polyacrylate, un composé tel que défini précédemment, sauf indications contraires.

Selon un mode préféré de l'invention, le composé polyacrylate est présent dans la composition de polyfluorovinylidène formant la couche (B) quand la couche intermédiaire (C) est absente.

Selon un autre mode préféré de l'invention, la structure multicouche comprend une couche en polyfluorovinylidène ne comprenant pas de composé polyacrylate. Cette couche peut être une couche (B) définie ci-dessus, la structure comprenant soit une couche (C) associée avec une couche (A) comprenant ou non un composé polyacrylate soit une couche (A) comprenant un composé acrylate. La couche en polyfluorovinylidène sans composé polyacrylate peut également être une couche supplémentaire associée à une couche (B) d'une structure conforme à l'invention.

La structure multicouche de l'invention présente des propriétés élevées de barrière, notamment aux composés oxygénés présents dans les carburants tels que l'alcool, par la présence d'une couche en polyfluorovinylidène qui sera avantageusement disposée du côté interne ou intérieur, c'est-à-dire la plus proche du fluide contenu dans le dispositif réalisé avec ladite structure multicouche. Cette couche en polyfluorovinylidène est une couche (B) selon l'invention.

La structure de l'invention présente également des propriétés mécaniques élevées dues à la présence en couche externe d'une couche en polyamide, présentant une bonne résistance au craquage sous tension. A titre d'exemple de propriétés mécaniques intéressantes on peut citer la résistance au craquage, la résistance au choc même à basses températures.

Ainsi, les polyamides convenables pour l'invention sont notamment les polyamides et copolyamides aliphatiques tels que PA 4.6 ; PA 6.6 ; PA 6.12 ; PA 6.10 ; PA 6 ; PA 11 ; PA 12.

Comme copolyamides particulièrement convenables pour la présente invention on peut citer les copolyamides PA 6/6.36 ; ou les alliages de PA 6 et PA 6 / 6.36.

Ces copolyamides ou alliages de polyamides sont notamment décrits dans le brevet US n° 5 256 460 et la demande française non publiée n° 95 11681.

Selon une caractéristique préférentielle de l'invention, la composition polyamide comprend un agent plastifiant tel que par exemple, des composés sulfonamides, un polyalkylèneglycol tel que le polyethylèneglycol, un alkyl ester de l'acide p-hydroxybenzoîque.

La composition polyamide peut également comprendre des agents pour augmenter la ténacité, tels que des élastomères, des additifs conventionnels comme, par exemple, des stabilisants chaleur ou lumière, des additifs améliorant la processabilité (injection ou extrusion) de la composition, des charges pour améliorer, par exemple, les propriétés antistatiques, des pigments ou analogues.

La structure et préparation des polyfluorovinylidènes convenables pour l'invention sont notamment décrits dans l'ouvrage Kunstoff - Handbuch, 1st edition, vol. XI, pp 403 et suivantes, éditeur Cari Hanser Verlag Munich (1971), ou par Hans R. Kricheldorf dans Handbook of Polymer Synthesis, Partie Ar, pp 191 et suivantes publié par Marcel Dekker Inc.

Le polyfluorovinylidène peut être un copolymère de fluorovinylidène avec d'autres monomères tels que trifluoroéthylène, éthylène, hexafluoropropylène chlorotrifluoroéthylène ou un mélange de polyfluorovinylidène.

Cette composition peut également comprendre tous les additifs usuels et conventionnels tels qu'additifs pour améliorer la processabilité, stabilisants chaleur et lumière, pigments, charges ou analogues.

Selon l'invention, le composé polyacrylate comprend des fonctions acides, aminés, anhydrides ou époxy liées avantageusement aux groupes carboxyliques de la structure polyacrylique. Plus généralement, le composé polyacrylate convenable pour l'invention contient des fonctions réactives avec les fonctions amines ou acides du polyamide.

Les fonctions préférées de l'invention sont les fonctions époxy, les fonctions carboxyliques d'un composé polyacrylique étant salifiées avec un composé comprenant un radical glycidyle.

Avantageusement, la concentration en groupe fonctionnel T ou fonctions réactives, de préférence groupe époxy, est comprise entre 0,1 meq / g et 1 meq / g de composé polyacrylate.

Les composés polyacrylates préférés de l'invention sont ceux présentant des unités récurrentes de formule (i) et (ii) de type méthacrylate.

Les composés polyacrylates avantageusement préférés de l'invention sont ceux comprenant des unités récurrentes de formule (iii) dans laquelle R₅ représente une chaîne méthylpolyméthacrylate.

Comme composé polyacrylate convenable pour l'invention on peut citer à titre d'exemple, un copolymère éthylène / acrylique comprenant des radicaux glycidiques décrit dans la publication de M. Takashi YAMAMOTO publiée sous le titre "New manufacturing processes for block and graft copolymers by radical reactions" dans le journal Polymer 32 volt p.19 (1991) et commercialisé sous le nom commercial "MODIPER" par la société NIPPON OIL AND FATS, un polyméthacrylate comprenant également des fonctions glycidyles et commercialisé sous le nom commercial RESEDA par la société TOUA GOSEI.

Selon une caractéristique de l'invention, le composé polyacrylate est présent dans les compositions formant les couches A ou B à une concentration pondérale comprise entre 5 et 25 % de la composition, de préférence entre 10 et 20 %.

La couche intermédiaire C peut être constituée uniquement par du polyacrylate, ou plus avantageusement par un mélange de polyacrylate et de polyfluorovinylidène avec une concentration pondérale en polyacrylate avantageusement comprise entre 5 et 99% de la composition formant cette couche intermédiaire.

Selon un autre mode de réalisation, cette couche intermédiaire peut comprendre, en outre, un polyamide avantageusement un polyamide de même nature que celui constituant la composition formant la couche A.

Les proportions pondérales préférées des composants de la couche intermédiaire C par rapport à la totalité de ces composants sont :
5 % - 100% de composé polyacrylate
0 % - 95% de polyfluorovinylidène
0 % - 90% de polyamide (quand le polyamide est présent dans la couche C, la concentration pondérale en fluoropolyvinylidène est supérieure à 5%).

La somme de ces concentrations est égale à 100 %.

Cette couche intermédiaire C qui constitue une couche adhésive est de faible épaisseur par rapport à l'épaisseur des couches A et B. Cette épaisseur est avantageusement de l'ordre de quelques micromètres à quelques dixièmes de millimètre.

La couche intermédiaire peut être déposée par tout moyen entre les couches A et B

Toutefois, dans un mode de réalisation préféré de l'invention, cette couche sera coextrudée avec les autres couches A et B.

Les différentes compositions sont préparées selon les méthodes usuelles de fabrication de mélange de polymère avec d'autres additifs, par mélange en milieu fondu des différents composants de la composition.

Ainsi, le composé polyacrylate est avantageusement mélangé avec le polyfluorovinylidène et/ou le polyamide à une température supérieure au point de fusion du polyacrylate et des autres polymères. Ce mélange est généralement réalisé dans une extrudeuse simple vis ou bi-vis à une température comprise entre 200 et 320°C.

La structure multicouche est obtenue par extrusion ou injection simultanée des différentes couches selon des formes désirées pour former des articles.

Ainsi, les articles dont les parois ont une structure multicouche selon l'invention sont par exemple, des tubes, conduits destinés avantageusement au transport de fluides liquides tels qu'alcool, carburants, notamment les carburants contenant des composés oxygénés tels que de l'alcool, plus généralement des produits issus de coupes pétrolières, ainsi que les fluides réfrigérants.

Ces articles peuvent être également des corps creux destinés à contenir des liquides tels que décrits ci-dessus, par exemple des réservoirs de carburant pour moteur à explosion.

Ces articles sont avantageusement obtenus par coextrusion des différentes couches formant leur paroi conformément à l'invention.

Les structures multicouche de l'invention peuvent comprendre plusieurs couches A et B disposées altemativement.

Elles peuvent également comprendre, en couche externe ou interne des couches réalisées avec un matériau différent de ceux constituants les couches A et B, par exemple le conduit ou réservoir peut comprendre une couche interne réalisé en alcool d'éther vinylique.

Par ailleurs, les couches A d'une structure peuvent avoir des compositions différentes, il en est de même pour les couches B.

En outre, certaines couches A ou B, notamment les couches externes peuvent comprendre des charges conductrices du courant électrique pour permettre une dissipation des charges électrostatiques.

Enfin, l'épaisseur des couches A et B peut être variable et est avantageusement comprise entre 0,1mm et 1mm.

D'autres buts, avantages et détails de l'invention apparaîtront plus clairement au vu des exemples donnés ci-dessous uniquement à titre indicatif et des figures annexées dans lesquelles :

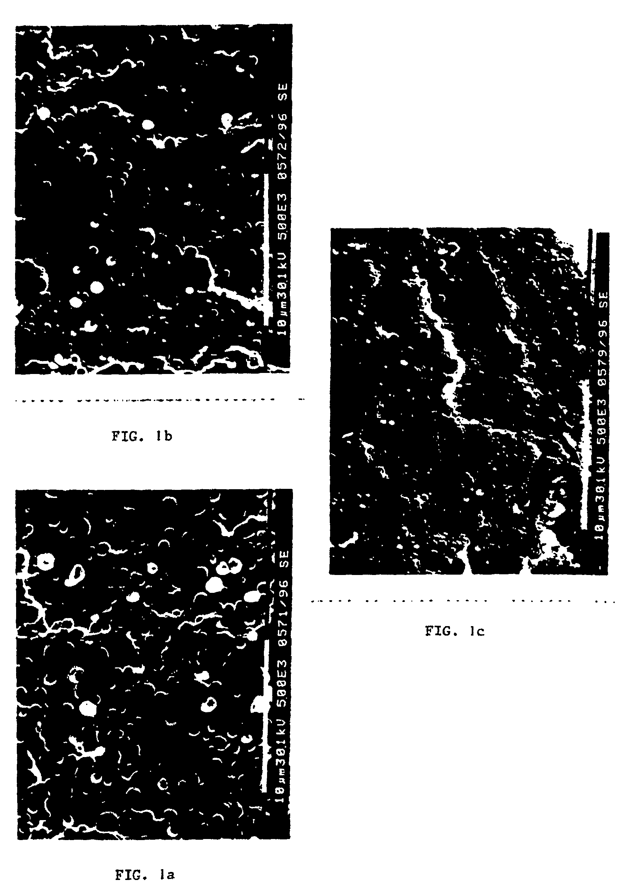

- les figures 1a, 1b et 1c sont des vues d'analyse microscopique obtenues par un microscope à balayage électronique des compositions respectivement des exemples 1, 2 et 3, et
- les figures 2a et 2b sont des vues d'analyse microscopique obtenues par un microscope à balayage électronique de la section transversale des parois de tube respectivement des exemples 4 et 9c.

Les structures multicouches de l'invention illustrées dans les exemples ci-dessous sont utilisées pour la fabrication de tubes ou conduits obtenus par coextrusion des différentes couches.

Ainsi, les tubes sont obtenus par utilisation d'une machine de coextrusion comprenant trois vis simples d'extrusion présentant un rapport L/D (longueur/diamètre) égal à 35, 30 et 35 correspondant respectivement à la couche externe, la couche centrale et la couche interne.

Les déterminations des caractéristiques des matériaux constituant les différentes couches et les propriétés des tubes fabriqués sont réalisées selon les procédures décrites ci-dessous :

La détermination de la viscosité relative des polyamides est obtenue par dissolution dans une solution d'acide sulfurique à 96% pour obtenir une solution à 0,5% de polymère en poids à 25°C et mesure de la viscosité selon la norme ASTM D-789, ou ISO 307.

L'indice de fluidité en milieu fondu (Melt Flow Index ou MFI) du polyfluorovinylidène utilisé est déterminé à 230°C sous une charge de 5000g selon la norme ASTM D 1238 ou ISO 1133.

La perméabilité des tubes fabriqués est évaluée par une méthode statique. Un échantillon de tube de longueur 300 mm est fermé à une de ses extrémités avec un bouchon de NYLON recouvert par une colle résistante au carburant. Le tube est connecté par son autre extrémité à un réservoir de carburant d'une capacité de 25 cm³, pour ainsi maintenir constante la composition du carburant dans le tube. Le tube est conditionné en température et en imprégnation de fluide pour ainsi obtenir une mesure directe de la perméabilité. Les essais sont réalisés à 40°C et la diffusion est déterminée par la perte de poids pendant une durée déterminée, par exemple après des durées de 24 heures.

Ainsi, la perméabilité correspond à la vitesse de perte de poids de l'échantillon déterminée quand la perte de poids pour des durées successives est constante.

Le carburant utilisé est un carburant normalisé appelé M15 et a la composition pondérale suivante :
- 42,5% de toluène
- 42,5% d'isooctane
- 15% de méthanol

L'adhérence mécanique entre chaque couche est évaluée par découpe du tube avec une lame métallique selon un angle de coupe de 5° et selon une génératrice du tube, puis application d'une charge de 2,5 kg. Si l'adhérence entre les couches est insuffisante, celles-ci se séparent. Au contraire quand l'adhérence est suffisante, la séparation des couches n'est pas observée ou la ligne de séparation est située dans l'épaisseur d'une couche .

Un test de pelage est également mis en oeuvre par utilisation d'un dispositif INSTRON 4025 avec une vitesse de tête de 250 mm/min.

L'adhérence entre les couches de la structure de l'invention, et plus particulièrement la compatibilité entre les matériaux composant deux couches adjacentes est contrôlée par analyse par microscopie à balayage électronique. Ainsi, la distribution des tailles de particules de la phase dispersée, ou l'état de la liaison à l'interface de deux couches sont observées. Pour cette observation, les échantillons de tube sont refroidis dans l'azote liquide et cassés. Après revêtement par une fine couche d'or, les échantillons sont examinés avec un microscope PHILIPS 515.

### Exemples 1 à 3 : Mode de réalisation d'une couche des structures multicouches

Des mélanges de polyamide et polyfluorovinylidène (PVDF) ont été réalisés avec ou sans composés polyacrylate, puis analysés par microscopie selon la méthode décrite ci-dessus, pour démontrer l'effet compatibilisant des composés acrylates.

Un mélange comprenant 20 parts en poids de polyamide PA6/6.36 de viscosité relative égale à 3,2 et 20 parts en poids de PVDF d'indice de viscosité en milieu fondu (MFI) égal à 2 à 230°C sous une charge de 5000 g commercialisé sous le nom commercial SOLEF 61010 par la société SOLVAY est fabriqué par mélange des deux polymères à l'état fondu sans solvant.

Deux autres compositions sont fabriquées en ajoutant respectivement 10 et 20 % en poids par rapport à la composition totale d'un composé polyacrylate dans le mélange décrit ci-dessus. Le composé polyacrylate est un polyméthacrylate comprenant des groupes fonctionnels T époxy et des unités récurrentes de formule (iii) méthylpolyméthacrylate. Ce composé est commercialisé par la société TOUA GOSEI sous la dénomination commerciale RESEDA GP-301.

Certaines propriétés de ces mélanges sont indiquées dans le tableau I ci-joint :

**Tableau I**

| Propriétés | Mélange PA/PVDP (1:1) | Mélange PA/PVDF (1:1) plus 10% de RESEDA GP-301 | Mélange PA/PVDP (1:1) plus 20% de RESEDA GP-301 |
|---|---|---|---|
| Allongement à la rupture (%) | 271 | 349 | 351 |
| Résistance à la traction (Mpa) | 41 | 50 | 53 |
| Résistance aux choc entaillé (IZOD) (J/m) | 31 | 42 | 51 |
| Tg (°C) | -33/65 | 59 | 59 |
| Analyse par microscopie | FIG 1a | FIG 1b | FIG 1c |

Ces résultats démontrent l'effet compatibilisant du composé polyacrylate pour un mélange PA/PVDF, notamment l'existence d'une seule température de transition vitreuse (Tg).

Cet effet compatibilisant est également démontré par les analyses par microscopie de chacune de ces compositions, illustrant la disparition des nodules de PVDF dans la matrice polyamide.

### Exemple 4

Un tube présentant une structure de paroi à deux couches superposées est réalisé avec la machine de coextrusion décrite précédemment.

La couche externe est formée à partir d'une composition de polyamides comprenant une partie en poids d'un polyamide PA6 de viscosité relative égale à 3,8 et 2 parties en poids d'un copolyamide 6/6.36 de viscosité relative égale à 3,2. La composition comprend également 30 parties en poids pour 100 parties en poids de polyamide, d'un composé lonomère neutralisé par du zinc et commercialisé par la société EXXON sous l'appellation commerciale IOTEK 7010, et 8 parties en poids pour 100 parties en poids de polyamide d'un agent plastifiant (N-butyl benzènesulfonamide).

Cette couche externe présente une bonne résistance au craquage, notamment au craquage sous tension dans une solution de CaCl₂ ou ZnCl₂. Cette composition possède également une faible absorption du méthanol et une faible perméabilité aux carburants sans plomb et aux carburants non oxygénés et plus particulièrement au carburant ne contenant pas d'alcool.

La couche interne est constituée par un mélange contenant 80% en poids de fluoropolyvinylidène et 20% en poids d'un composé acrylate. Le fluoropolyvinylidène est commercialisé par la société SOLVAY sous le nom commercial SOLEF 61010 et présente un indice de fluidité en milieu fondu (MFI) égal à 2(mesuré à 230°C sous une charge de 5000g). Le composé acrylate est commercialisé par la société TOUA GOSEI sous l'appellation RESEDA GP-301.

Les températures d'extrusion sont de 250°C pour la couche externe et 210°C pour la couche interne.

Le tube a un diamètre externe de 8 mm et une épaisseur de paroi de 1 mm.

L'épaisseur de la couche externe est de 0,85 mm, celle de la couche interne étant de 0,15 mm.

### Exemple 9c

A titre de comparaison un tube identique en dimension et structure est réalisé avec une couche externe identique à celle du tube de l'exemple 4, et une couche interne obtenue à partir d'une composition comprenant uniquement du fluoropolyvinylidène, sans agent de compatibilisation. Les conditions d'extrusion sont identiques à celles de l'exemple 4.

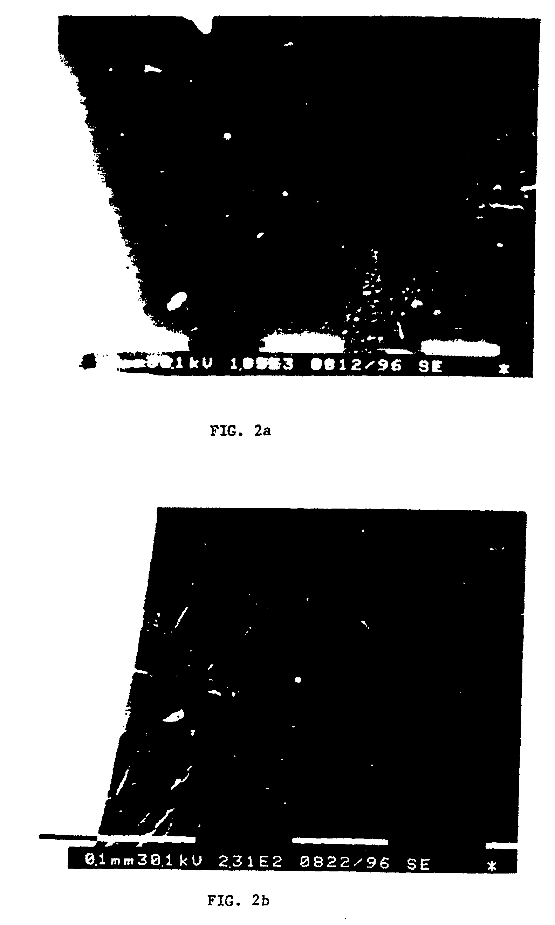

Une analyse microscopique de la structure de la paroi de chaque tube selon une coupe transversale, représentées aux figures 2a et 2b, montrent clairement que dans le cas de l'exemple 9c il n'existe pas d'adhérence entre les deux couches(Fig. 2b).

Au contraire l'adhérence entre les couches de la paroi du tube de l'exemple 4 est continue (Fig. 2a).

D'autres caractéristiques telles que la perméabilité aux carburants, la cohésion de la structure sont indiquées dans le tableau II ci-dessous.

### Exemple 5

Un tube comprenant une structure de paroi à 3 couches superposées et coextrudées est réalisé avec des couches externe et interne de compositions identiques à celles de l'exemple 9c mais d'épaisseurs différentes, et selon des conditions d'extrusion identiques à celles de l'exemple 4.

La couche intermédiaire centrale ou couche adhésive est constituée par un mélange comprenant une partie en poids de polyamide 6/6.36 de viscosité relative égale à 3,2 et une partie en poids de fluoropolyvinylidène décrit précédemment. Ce mélange comprend également 20 parties en poids pour 100 parties de mélange PA/PVDF d'un composé polyacrylate RESEDA GP-301.

Les caractéristiques de perméabilité et de cohésion de la paroi du tube sont indiquées dans le tableau II ci-dessous.

### Exemple 6

Un tube avec une structure à trois couches coextrudées similaire à celle de l'exemple 5 a été réalisé. Toutefois, la couche intermédiaire centrale ou adhésive est obtenue à partir d'une composition constituée par un mélange de 80% en poids de PVDF tel que décrit dans les exemples précédents et de 20% en poids d'un agent compatibilisant polyacrylate, RESEDA GP-301.

Les propriétés de ce tube sont également indiquées dans le tableau II ci-dessous.

A titre comparatif, les propriétés de perméabilité et éventuellement de cohésion de la paroi ont été évaluées pour des tubes dont la paroi est constituée respectivement par une seule couche d'une composition polyamide correspondant à celle de la couche externe du tube de l'exemple 4 (exemple 7c), par une seule couche d'une composition dé PVDF correspondant à celle de la couche interne de l'exemple 5 (exemple 8c), et par une structure deux couches coextrudées dont la couche externe est obtenue à partir d'une composition polyamide identique à celle de la couche externe de l'exemple 4 et la couche interne est obtenue à partir d'une composition PVDF identique à celle de la couche interne de l'exemple 5 (exemple 9c).

### Exemple 10

D'autres exemples ont été réalisés avec une couche externe en polyamide de composition identique à celle de l'exemple 4 mais l'élastomère est un composé commercialisé par la société EXXON sous le nom EXXELOR 8013, la couche interne est réalisée avec un homopolymère fluoropolyvinylidène commercialisé par la société SOLVAY sous le nom commercial SOLEF 1009.

La couche intermédiaire est un mélange d'un copolyamide PA 6/6.36, d'un fluoropolyvinylidène commercialisé par la société SOLVAY sous le nom SOLEF 35108 et le composé acrylate RESEDA GP6301 utilisé à l'exemple 4. La teneur pondérale de ces différents composants est celle indiquée à l'exemple 5.

### Exemple 11

Un tube identique à celui de l'exemple 5 est réalisé avec une couche externe réalisé avec un polyamide (PA 6 contenant 28 % élastomère Exxelor 8013 et 7 % de plastifiant N-butylbenzènesulfonamide et une couche interne en PVDF "SOLEF 1009". La couche intermédiaire est obtenue à partir d'un mélange PVDF, PA 6, composé acrylate.

Le PVDF est un copolymère polyfluorovinylidène commercialisé par la société SOLVAY sous le nom commercial SOLEF 35108.

Le composé acrylate est le composé RESEDA GP-301.

Les propriétés de ces différents tubes sont rassemblées dans le tableau ci-dessous :

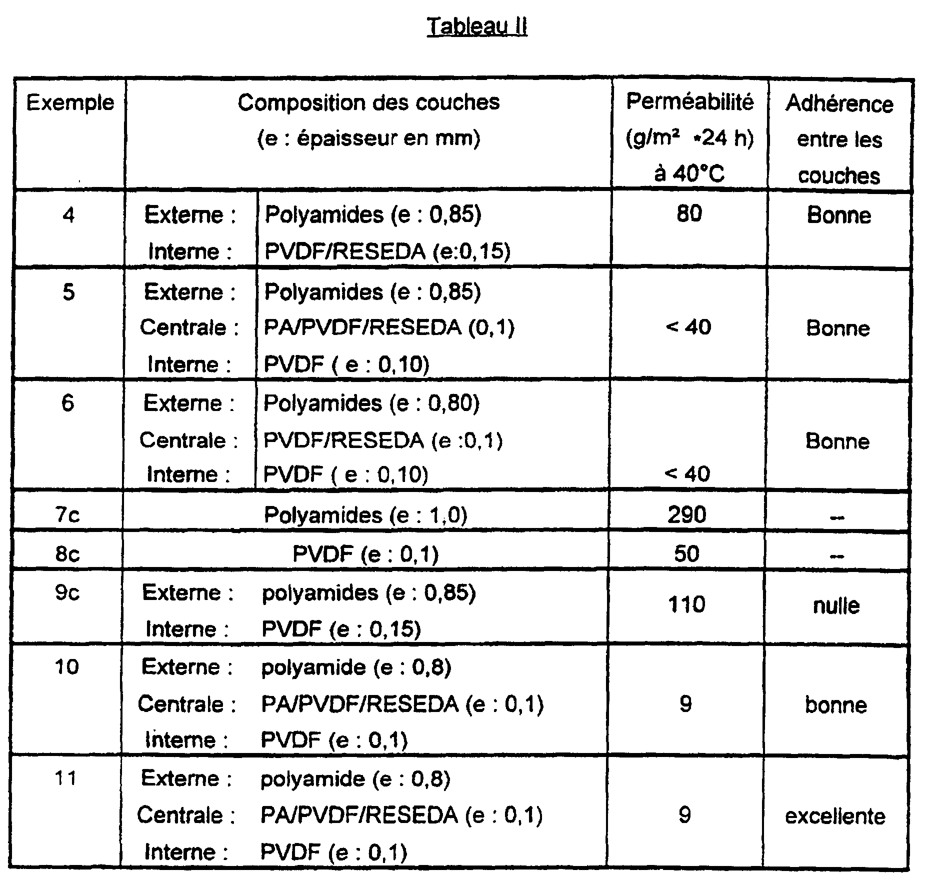

Les compositions conformes à l'invention présentent également une bonne résistance aux craquages dans les solutions de sel. (Cette résistance est déterminée par le test ZnCl₂ décrit dans la norme internationale SAE.J.844 émise en juin 1963 et révisée le 12 juin 1990).

## Revendications

1. Structure multicouche comprenant au moins une couche (A) formée à partir d'une composition à base de polyamide et au moins une couche (B) adjacente formée à partir d'une composition à base de polyfluorovinylidène, **caractérisée en ce que** la composition à base de polyamide et/ou la composition à base de polyfluorovinylidène comprennent un composé polyacrylate comprenant les unités récurrentes de formules suivantes : 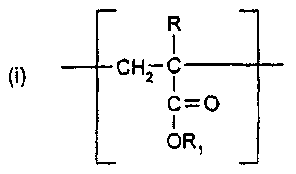 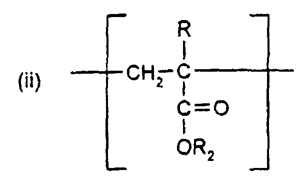 dans lesquelles :
R, R₁ : identiques ou différents, représentent des groupements alkyles comprenant de 1 à 12 atomes de carbone,
R₂ : est un radical de formule R₄-T dans laquelle R₄ est un radical alkyle, aryle, arylalkyle ou alkylaryle, et T représente un groupe fonctionnel amine, époxy, acide ou anhydride
et éventuellement des unités récurrentes de formule : 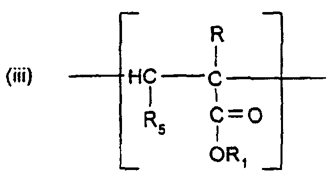 et/ou 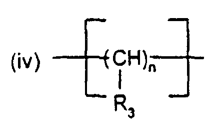
R₅ représente une chaîne polyalkyl(méth)acrylate
R₃ représente un radical alkyl comprenant de 1 à 6 atomes de carbone,
n : est un nombre entier compris entre 1 et 4.

2. Structure multicouche comprenant au moins une couche (A) formée à partir d'une composition à base de polyamide et au moins une couche adjacente (B) formée à partir d'une composition à base de polyfluorovinylidène, **caractérisée en ce qu'**elle comprend une couche intermédiaire (C) adhésive disposée entre les couches (A) et (B), ladite couche (C) étant formée à partir d'une composition comprenant au moins un composé polyacrylate comprenant des unités récurrentes de formules suivantes : 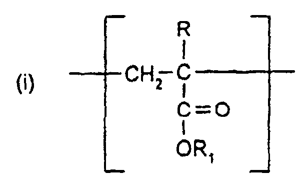 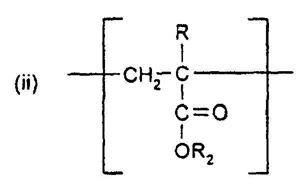 dans lesquelles :
R, R₁ : représentent des groupements alkyles comprenant de 1 à 12 atomes de carbone,
R₂ : est un radical de formule R₄-T dans laquelle R₄ est un radical alkyle, aryle, arylalkyle ou alkylaryle, et T représente un groupe fonctionnel amine, époxy, acide ou anhydride
et éventuellement des unités récurrentes de formule : 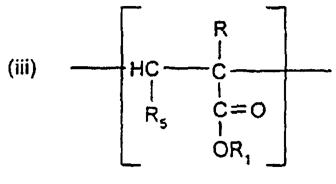 et/ou 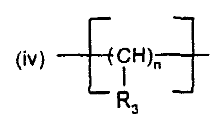 dans laquelle :
R₅ représente une chaîne polyalkyl(méth)acrylate
R₃ représente un radical alkyl comprenant de 1 à 6 atomes de carbone,
n : est un nombre entier compris entre 1 et 4.

3. Structure selon l'une des revendications précédentes, **caractérisée en ce qu'**elle constitue les parois d'un article creux tel que tubes, conduits, réservoirs.

4. Structure selon l'une des revendications précédentes, **caractérisée en ce que** le polyamide est choisi parmi les polyamides et copolyamides aliphatiques tels que PA 4.6 ; PA 6.6 ; PA 6.12 ; PA 6.10 ; PA 6 ; PA 11 ; PA 12 ; PA 6.36 ; PA6/6.36, les mélanges de ces polyamides.

5. Structure selon l'une des revendications précédentes, **caractérisée en ce que** le polyamide est un mélange de PA 6 et de copolyamide 6/6.36.

6. Structure selon l'une des revendications précédentes, **caractérisée en ce que** l'expression T de la formule R₄-T représente une fonction époxy.

7. Structure selon la revendication 6, **caractérisée en ce que** le radical R₂ est le radical glycidyle.

8. Structure selon l'une des revendications précédentes, **caractérisée en ce que** la concentration en radical fonctionnel T dans le composé polyacrylate est comprise entre 0,1 meq / g et 1 meq / g de composé polyacrylate.

9. Structure selon l'une des revendications précédentes, **caractérisée en ce que** le composé polyacrylate comprend des unités récurrentes de formule (iii) dans laquelle R₅ est une chaîne méthylpolyméthacrylate.

10. Structure selon l'une des revendications précédentes, **caractérisée en ce que** le composé polyacrylate est présent dans la composition à base de polyfluorovinylidène selon une concentration pondérale comprise entre 5 % et 25 % de composé polyacrylate par rapport au poids de composition.

11. Structure selon la revendication 10, **caractérisée en ce que** la concentration en composé polyacrylate est comprise entre 10 et 20 %.

12. Structure selon l'une des revendications 2 à 11, **caractérisée en ce que** la couche intermédiaire (C) comprend un polyfluorovinylidène et/ou un polyamide.

13. Structure selon l'une des revendications 2 à 12, **caractérisée en ce que** la couche intermédiaire (C) à la composition pondérale suivante:
5 % - 100% de composé acrylate
0 % - 95% de polyfluorovinylidène
0 % - 90% de polyamide,
et quand le polyamide est présent dans la couche C , la concentration pondérale en fluoropolyvinylidène est supérieure à 5%, la somme de ces concentrations étant égale à 100 %.

14. Structure selon l'une des revendications 2 à 13, **caractérisée en ce que** la composition formant la couche (A) comprend un polyacrylate défini selon la revendication 1.

15. Structure selon l'une des revendications précédentes, **caractérisée en ce que** la composition polyamide formant la couche (A) comprend un plastifiant.

16. Utilisation de structure multicouche selon l'une des revendications 1 à 15, pour la fabrication de conduits ou récipients destinés à contenir des carburants, de préférence des carburants oxygénés.

17. Utilisation selon la revendication 16, **caractérisée en ce que** les conduits sont des conduits de carburants pour moteur à combustion.

18. Utilisation de structure multicouche selon l'une des revendications 1 à 15 pour la fabrication de corps creux par coextrusion des couches de la dite structure.

## Claims

1. Multilayer structure comprising at least one layer (A) formed from a polyamide-based composition and at least one adjacent layer (B) formed from a polyvinylidene-fluoride-based composition, **characterized in that** the polyamide-based composition and/or the polyvinylidene-fluoride-based composition comprise a polyacrylate compound comprising the repeat units of the following formulae: 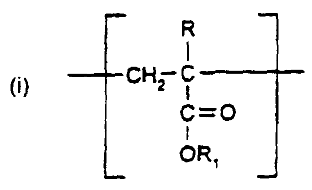 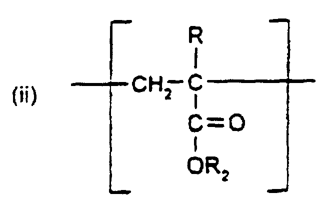 in which:
R, R₁: which are identical or different, represent alkyl groups comprising from 1 to 12 carbon atoms,
R₂: is a radical of formula R₄-T in which R₄ is an alkyl, aryl, arylalkyl or alkylaryl radical and T represents an amine, epoxy, acid or anhydride functional group
and, optionally, repeat units of formula: 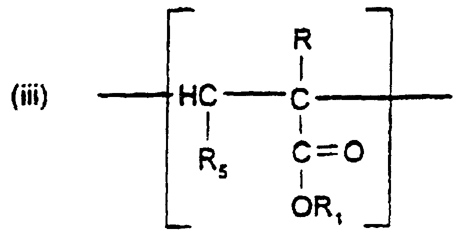 and/or 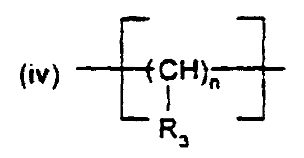 R₅ represents a polyalkyl(meth)acrylate chain
R₃ represents an alkyl radical comprising from 1 to 6 carbon atoms,
n: is an integer between 1 and 4.

2. Multilayer structure comprising at least one layer (A) formed from a polyamide-based composition and at least one adjacent layer (B) formed from a polyvinylidene-fluoride-based composition, **characterized in that** it comprises an adhesive intermediate layer (C) placed between the layers (A) and (B), the said layer (C) being formed from a composition comprising at least one polyacrylate compound comprising repeat units of the following formulae: 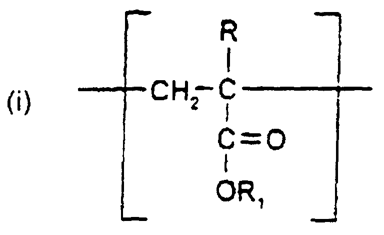 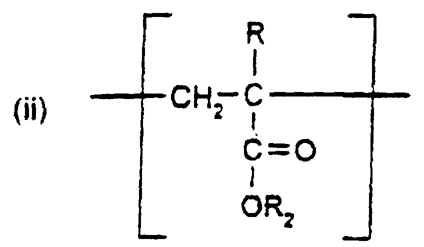 in which:
R, R₁: represent alkyl groups comprising from 1 to 12 carbon atoms,
R₂: is a radical of formula R₄-T in which R₄ is an alkyl, aryl, arylalkyl or alkylaryl radical and T represents an amine, epoxy, acid or anhydride functional group
and, optionally, repeat units of formula: 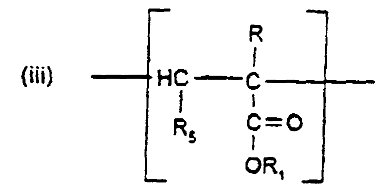 and/or 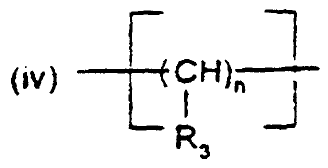 in which:
R₅ represents a polyalkyl(meth)acrylate chain
R₃ represents an alkyl radical comprising from 1 to 6 carbon atoms,
n: is an integer between 1 and 4.

3. Structure according to one of the preceding claims, **characterized in that** it forms the walls of a hollow article, such as a tube, pipe or tank.

4. Structure according to one of the preceding claims, **characterized in that** the polyamide is chosen from aliphatic polyamides and copolyamides such as PA4,6; PA6,6; PA6,12; PA6,10; PA6; PA11; PA12; PA6,36; PA6/6,36, and mixtures of these polyamides.

5. Structure according to one of the preceding claims, **characterized in that** the polyamide is a blend of a PA6 and a PA6/6,36 copolyamide.

6. Structure according to one of the preceding claims, **characterized in that** the expression T in the formula R₄-T represents an epoxy functional group.

7. Structure according to Claim 6, **characterized in that** the radical R₂ is the glycidyl radical.

8. Structure according to one of the preceding claims, **characterized in that** the concentration of functional radical T in the polyacrylate compound is between 0.1 meq/g and 1 meq/g of polyacrylate compound.

9. Structure according to one of the preceding claims, **characterized in that** the polyacrylate compound comprises repeat units of formula (iii) in which R₅ is a polymethyl methacrylate chain.

10. Structure according to one of the preceding claims, **characterized in that** the polyacrylate compound is present in the polyvinylidene-fluoride-based composition in a concentration by weight of between 5% and 25% of the polyacrylate compound with respect to the weight of the composition.

11. Structure according to Claim 10, **characterized in that** the concentration of polyacrylate compound is between 10 and 20%.

12. Structure according to one of Claims 2 to 11, **characterized in that** the intermediate layer (C) comprises a polyvinylidene fluoride and/or a polyamide.

13. Structure according to one of Claims 2 to 12, **characterized in that** the intermediate layer (C) has the following composition by weight:
5% - 100% of acrylate compound
0% - 95% of polyvinylidene fluoride
0% - 90% of polyamide,
and when the polyamide is present in the layer C, the concentration by weight of polyvinylidene fluoride is greater than 5%, the sum of these concentrations being equal to 100%.

14. Structure according to one of Claims 2 to 13, **characterized in that** the composition forming the layer (A) comprises a polyacrylate defined according to Claim 1.

15. Structure according to one of the preceding claims, **characterized in that** the polyamide composition forming the layer (A) comprises a plasticizer.

16. Use of a multilayer structure according to one of Claims 1 to 15, for the manufacture of pipes or tanks intended for containing fuels, preferably oxygenated fuels.

17. Use according to Claim 16, **characterized in that** the pipes are fuel pipes for combustion engines.

18. Use of a multilayer structure according to one of Claims 1 to 15 for the manufacture of hollow bodies by coextruding the layers of the said structure.

## Patentansprüche

1. Mehrschichtstruktur, umfassend mindestens eine Schicht (A), gebildet ausgehend von einer Zusammensetzung auf der Basis von Polyamid, und mindestens eine angrenzende Schicht (B), gebildet ausgehend von einer Zusammensetzung auf der Basis von Polyfluorvinyliden, **dadurch gekennzeichnet, daß** die Zusammensetzung auf der Basis von Polyamid und/oder die Zusammensetzung auf der Basis von Polyfluorvinyliden eine Polyacrylat-Verbindung umfassen, die ihrerseits wiederkehrende Einheiten der folgenden Formeln: 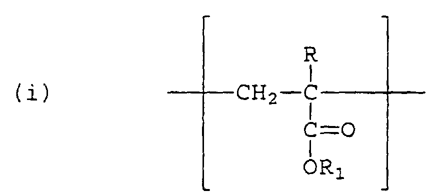 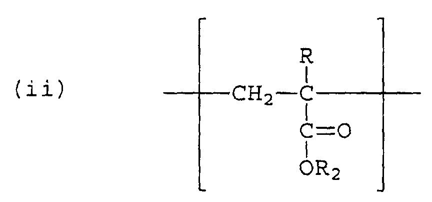 in denen
R, R₁ : gleich oder verschieden, Alkylgruppen mit 1 bis 12 Kohlenstoffatomen darstellen,
R₂ : einen Rest der Formel R₄-T bedeutet, worin R₄ ein Rest Alkyl, Aryl, Arylalkyl oder Alkylaryl ist und T eine funktionelle Gruppe Amin, Epoxy, Säure oder Anhydrid darstellt,
und gegebenenfalls wiederkehrende Einheiten der Formel 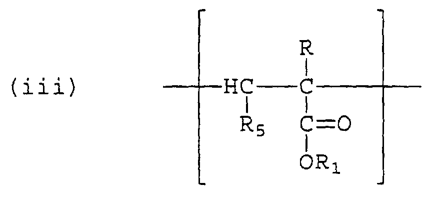 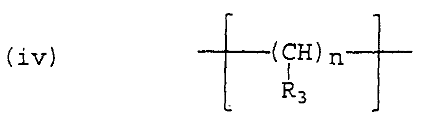 aufweist, worin
R₅ eine Kette Polyalkyl(meth)acrylat darstellt,
R₃ einen Rest Alkyl mit 1 bis 6 Kohlenstoffatomen bedeutet,
n eine ganze Zahl zwischen 1 und 4 ist.

2. Mehrschichtstruktur, umfassend mindestens eine Schicht (A), gebildet ausgehend von einer Zusammensetzung auf der Basis von Polyamid, und mindestens eine angrenzende Schicht (B), gebildet ausgehend von einer Zusammensetzung auf der Basis von Polyfluorvinyliden, **dadurch gekennzeichnet, daß** sie eine adhäsive Zwischenschicht (C) umfaßt, die sich zwischen den Schichten (A) und (B) befindet und die ausgehend von einer Zusammensetzung gebildet wird, die mindestens eine Polyacrylat-Verbindung umfaßt, die ihrerseits wiederkehrende Einheiten der folgenden Formeln: 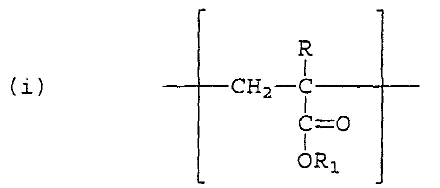 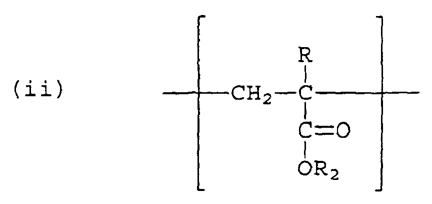 in denen
R, R₁ : Alkylgruppen mit 1 bis 12 Kohlenstoffatomen darstellen,
R₂ : einen Rest der Formel R₄-T bedeutet, worin R₄ ein Rest Alkyl, Aryl, Arylalkyl oder Alkylaryl ist und T eine funktionelle Gruppe Amin, Epoxy, Säure oder Anhydrid darstellt, und gegebenenfalls wiederkehrende Einheiten der Formel 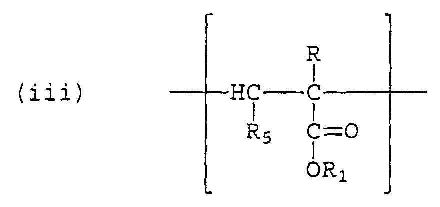 und/oder 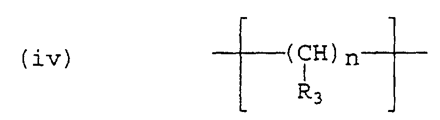 aufweist, worin
R₅ eine Kette Polyalkyl(meth)acrylat darstellt,
R₃ einen Rest Alkyl mit 1 bis 6 Kohlenstoffatomen bedeutet,
n eine ganze Zahl zwischen 1 und 4 ist.

3. Struktur nach einem der vorstehenden Ansprüche, **dadurch gekennzeichnet, daß** sie die Wandungen eines hohlen Gegenstandes bildet, wie eines Rohres, einer Leitung, eines Reservoirs.

4. Struktur nach einem der vorstehenden Ansprüche, **dadurch gekennzeichnet, daß** das Polyamid unter den aliphatischen Polyamiden und Copolyamiden wie PA 4.6; PA 6.6; PA 6.12; PA 6.10; PA 6; PA 11; PA 12; PA 6.36; PA 6/6.36 und den Mischungen dieser Polyamide ausgewählt wird.

5. Struktur nach einem der vorstehenden Ansprüche, **dadurch gekennzeichnet, daß** das Polyamid eine Mischung von PA 6 und dem Copolyamid 6/6.36 ist.

6. Struktur nach einem der vorstehenden Ansprüche, **dadurch gekennzeichnet, daß** der Ausdruck T der Formel R₄-T eine Epoxyfunktion darstellt.

7. Struktur nach Anspruch 6, **dadurch gekennzeichnet, daß** der Rest R₂ der Rest Glycidyl ist.

8. Struktur nach einem der vorstehenden Ansprüche, **dadurch gekennzeichnet, daß** die Konzentration an dem funktionellen Rest T in der Polyacrylat-Verbindung zwischen 0,1 Milliäquivalent/g und 1 Milliäquivalent/g Polyacrylat-Verbindung beträgt.

9. Struktur nach einem der vorstehenden Ansprüche, **dadurch gekennzeichnet, daß** die Polyacrylat-Verbindung wiederkehrende Einheiten der Formel (iii) umfaßt, worin R₅ eine Kette Methylpolymethacrylat ist.

10. Struktur nach einem der vorstehenden Ansprüche, **dadurch gekennzeichnet, daß** die Polyacrylat-Verbindung in der Zusammensetzungen auf der Basis von Polyfluorvinyliden in einer gewichtsmäßigen Konzentration zwischen 5 % und 25 % Polyacrylat-Verbindung anwesend ist, bezogen auf das Gewicht der Zusammensetzung.

11. Struktur nach Anspruch 10, **dadurch gekennzeichnet, daß** die Konzentration an der Polyacrylat-Verbindung zwischen 10 % und 20 % beträgt.

12. Struktur nach einem der Ansprüche 2 bis 11, **dadurch gekennzeichnet, daß** die Zwischenschicht (C) ein Polyfluorvinyliden und/oder ein Polyamid umfaßt.

13. Struktur nach einem der Ansprüche 2 bis 12, **dadurch gekennzeichnet, daß** die Zwischenschicht (C) die folgende gewichtsmäßige Zusammensetzung aufweist:
5 % - 100 % Acrylat-Verbindung
0 % - 95 % Polyfluorvinyliden
0 % - 90 % Polyamid,
und wenn das Polyamid in der Schicht (C) anwesend ist, die gewichtsmäßige Konzentration an Polyfluorvinyliden über 5 % beträgt, wobei die Summe dieser Konzentrationen gleich 100 % ist.

14. Struktur nach einem der Ansprüche 2 bis 13, **dadurch gekennzeichnet, daß** die Zusammensetzung, die Schicht (A) bildet, ein wie in Anspruch 1 definiertes Polyacrylat umfaßt.

15. Struktur nach einem der vorstehenden Ansprüche, **dadurch gekennzeichnet, daß** die Polyamid-Zusammensetzung, die Schicht (A) bildet, einen Weichmacher umfaßt.

16. Verwendung der Mehrschichtstruktur nach einem der Ansprüche 1 bis 15 zur Herstellung von Leitungen oder Behältern, die für die Aufnahme von Kraftstoffen, vorzugsweise sauerstoffhaltigen Kraftstoffen, vorgesehen sind.

17. Verwendung nach Anspruch 16, **dadurch gekennzeichnet, daß** die Leitungen Kraftstoffleitungen für Verbrennungsmotoren sind.

18. Verwendung der Mehrschichtstruktur nach einem der Ansprüche 1 bis 15 für die Herstellung von Hohlkörpern durch Co-Extrusion der Schichten mit der genannten Struktur.
